# EUROPÄISCHE PATENTANMELDUNG

(11) **EP 2 292 500 A1**
(43) Veröffentlichungstag der Anmeldung: **09.03.2011**
(21) Anmeldenummer: 09011244.2
(22) Anmeldetag: 02.09.2009
(51) Int. Cl.: B62J 15/02

(54) **Radschutzvorrichtung für ein Zweirad**

(71) Anmelder: sks metaplast Scheffer-Klute GmbH, 59846 Sundern (DE)
(72) Erfinder: Kordes, Sven, 59846 Sundern (DE); Grabski, Karsten, 58739 Wickede/Ruhr (DE); Krick, Peter, 59872 Meschede (DE)
(74) Vertreter: Basfeld, Rainer

(57) **Zusammenfassung**

Radschutzvorrichtung für ein Zweirad, insbesondere für ein Fahrrad, umfassend einen Radschützer (1) und mindestens eine Strebe (3), die einerseits mittelbar oder unmittelbar mit einem Teil des Zweirads verbunden werden kann und andererseits in einem ersten Verbindungsbereich (14) und in einem zweiten Verbindungsbereich (16) mit dem Radschützer (1) verbunden ist, wobei sich ein erster Abschnitt (7,8) der mindestens einen Strebe (3) zwischen den beiden Verbindungsbereichen (14;16) in der Längsrichtung des Radschützers (1) erstreckt.

## Beschreibung

Die vorliegende Erfindung betrifft eine Radschutzvorrichtung für Zweiräder gemäß dem Oberbegriff des Anspruchs 1.

Definitionen: Die Längsrichtung des Radschützers ist diejenige Richtung, die im an dem Zweirad angebauten Zustand der Radschutzvorrichtung zumindest teilweise der Umfangsrichtung eines der Räder des Zweirades folgt oder entspricht. Die Querrichtung des Radschützers ist diejenige Richtung, die im an dem Zweirad angebauten Zustand der Radschutzvorrichtung der axialen Richtung eines der Räder des Zweirades entspricht. Die Innenseite des Radschützers ist diejenige Seite, die im an dem Zweirad angebauten Zustand der Radschutzvorrichtung dem Rad zugewandt ist. Die Außenseite des Radschützers ist diejenige Seite, die im an dem Zweirad angebauten Zustand der Radschutzvorrichtung von dem Rad abgewandt ist.

Radschützer für Zweiräder, insbesondere für Fahrräder, häufig auch als Schutzbleche bezeichnet, bestehen zumeist aus einem im Wesentlichen rinnenförmigen Kunststoff- oder Blechprofil, welches als gebogenes Formteil mit geringem radialem Abstand einen Teil des Radumfangs abdeckt. Zur Befestigung am Fahrradrahmen sind meist paarweise auf beiden Seiten des Rades angeordnete Streben vorgesehen. In der Regel handelt es sich dabei um Drahtstreben, die bezüglich der Radnabe im Wesentlichen radial verlaufen und an ihrem inneren Ende im Bereich der Ausfallenden der Vordergabel beziehungsweise der Hintergabel mit dem Fahrradrahmen verbunden sind, beispielsweise durch Verschraubung. Im Bereich der äußeren Enden dieser Streben ist zumeist mit geeigneten Befestigungsmitteln der Radschützer gehaltert.

Eine Radschutzvorrichtung der eingangs genannten Art ist aus der EP 0 742 137 A2 bekannt. Die darin beschriebene Radschutzvorrichtung umfasst neben dem Radschützer und den Streben als Kunststoffformteile ausgebildete Befestigungsteile, die auf den Rand des Radschützers aufgeschoben werden können. In diese Befestigungsteile können die Enden der Streben eingeschoben und festgelegt werden.

Als nachteilig hierbei erweist es sich, dass die Befestigungsteile einerseits den optischen Gesamteindruck der Radschutzvorrichtung beeinträchtigen und andererseits vergleichsweise teuer in der Herstellung sind.

Das der vorliegenden Erfindung zugrunde liegende Problem ist die Schaffung einer Radschutzvorrichtung der eingangs genannten Art, die kostengünstiger herstellbar ist und/oder einen besseren optischen Gesamteindruck bietet.

Dies wird erfindungsgemäß durch eine Radschutzvorrichtung der eingangs genannten Art mit den kennzeichnenden Merkmalen des Anspruchs 1 gelöst. Die Unteransprüche betreffen bevorzugte Ausgestaltungen der Erfindung.

Gemäß Anspruch 1 ist vorgesehen, dass die mindestens eine Strebe in einem ersten Verbindungsbereich und in einem zweiten Verbindungsbereich mit dem Radschützer verbunden ist und dass sich ein erster Abschnitt der mindestens einen Strebe zwischen den beiden Verbindungsbereichen in der Längsrichtung des Radschützers erstreckt. Durch diese Gestaltung besteht die Möglichkeit, auf zusätzliche Befestigungselemente zu verzichten, so dass eine erfindungsgemäße Radschutzvorrichtung sowohl kostengünstiger herstellbar ist, als auch hinsichtlich des Gesamteindrucks ansprechender gestaltet werden kann. Weiterhin kann der sich in Längsrichtung des Radschützers erstreckende Abschnitt der Strebe zur Versteifung des Radschützers beitragen. Unter Umständen kann bei einem derart versteiften Radschützer auch auf - beispielsweise aus der EP 1 439 115 A2 bekannte - aufwendige Befestigungsmittel zwischen Strebe und Rahmen des Fahrrads verzichtet werden, die bei einer vorgegebenen Beanspruchung die Verbindung zwischen Strebe und Rahmen lösen.

Es besteht die Möglichkeit, dass die mindestens eine Strebe zwischen den beiden Verbindungsbereichen auf der Innenseite des Radschützers verläuft. Alternativ dazu besteht die Möglichkeit, dass die mindestens eine Strebe zwischen den beiden Verbindungsbereichen auf der Außenseite des Radschützers verläuft. Es kann letztlich eine Frage des Designs sein, ob die mindestens eine Strebe zwischen den beiden Verbindungsbereichen auf der Innenseite oder auf der Außenseite des Radschützers verläuft.

Gemäß einer bevorzugten Ausgestaltung der Erfindung kann vorgesehen sein, dass mindestens einer der Verbindungsbereiche eine Öffnung in dem Radschützer umfasst oder durch eine Öffnung in dem Radschützer gebildet ist, wobei sich die mindestens eine Strebe von der Innenseite des Radschützers zur Außenseite des Radschützers oder von der Außenseite des Radschützers zur Innenseite des Radschützers durch die Öffnung hindurch erstreckt. Anstelle der aus dem Stand der Technik bekannten Befestigungselemente kann bei der erfindungsgemäßen Radschutzvorrichtung die Verbindung von Strebe und Radschützer durch das Hindurcherstrecken der Strebe durch eine einfache Öffnung in dem Radschützer realisiert werden. Derartige Öffnungen können mit geringem Aufwand erstellt werden und beeinträchtigen den optischen Eindruck des Radschützers nur unwesentlich.

Dabei besteht die Möglichkeit, dass die Öffnung von Dichtmitteln umgeben ist. Die Dichtmittel können dauerhaft eine Korrosion oder Beschädigung des Radschützers im Bereich der Öffnung verhindern. Die Dichtmittel können beispielsweise ein Gummiring oder ein Stahlniet oder ähnliches sein.

Es besteht die Möglichkeit, dass die Öffnung zumindest abschnittsweise einen kreisförmigen Querschnitt aufweist. Dadurch sind sie an den Querschnitt der üblichen Streben angepasst.

Es kann weiterhin vorgesehen sein, dass die Öffnung über einen Schlitz mit dem Rand des Radschützers verbunden ist, wobei sich der Schlitz insbesondere in Querrichtung des Radschützers erstreckt. Dadurch wird das Einbringen der Strebe in die Öffnung erleichtert.

Es besteht durchaus auch die Möglichkeit, dass mindestens einer der Verbindungsbereiche ein Verbindungsteil umfasst, das die mindestens eine Strebe mit dem Radschützer verbindet. Damit kann die Strebe über ein zusätzliches Verbindungsteil an dem Radschützer gehalten werden.

Gemäß einer bevorzugten Ausgestaltung der Erfindung kann vorgesehen sein, dass die Radschutzvorrichtung ein Verbindungsmittel umfasst, durch das die mindestens eine Strebe mit einem Teil des Zweirads, insbesondere dem Rahmen des Zweirades, verbunden werden kann. Dieses Teil kann beispielsweise vergleichsweise einfach gestaltet sein und die mindestens eine Strebe in einer Nut haltern.

Es besteht die Möglichkeit, dass die mindestens eine Strebe einen zweiten Abschnitt aufweist, der von dem ersten Verbindungsbereich wegragt, und dass die mindestens eine Strebe einen dritten Abschnitt aufweist, der von dem zweiten Verbindungsbereich wegragt, wobei der erste Abschnitt der mindestens einen Strebe zwischen dem zweiten und dem dritten Abschnitt angeordnet ist.

Insbesondere kann dabei vorgesehen sein, dass der zweite und der dritte Abschnitt der mindestens einen Strebe aufeinander zu verlaufen, insbesondere V-förmig aufeinander zu verlaufen. Dadurch ergibt sich hohe Stabilität der Radschutzanordnung.

Es besteht die Möglichkeit, dass die von dem Radschützer abgewandten Enden des zweiten und des dritten Abschnitts der mindestens einen Strebe mit dem Verbindungsmittel verbunden sind, insbesondere in dieses eingesteckt sind. Auf diese Weise kann eine einfache Gestaltung der Radschutzschutzvorrichtung realisiert werden.

Weiterhin kann vorgesehen sein, dass die Radschutzvorrichtung Justagemittel umfasst, die eine Verschiebung der von dem Radschützer abgewandten Enden des zweiten und des dritten Abschnitts der mindestens einen Strebe gegeneinander, insbesondere in Längsrichtung der Abschnitte, ermöglichen. Dadurch kann die Radschutzanordnung an die Geometrien des Zweirades angepasst werden.

Insbesondere können dabei die Verbindungsmittel als Justagemittel dienen. Aufgrund der Tatsache, dass nun die radial inneren Enden der mindestens einen Strebe zur Justage verschoben werden können, ergibt sich eine einfachere Anpassung an die Geometrien des Zweirades als bei dem Stand der Technik, wo die dem Radschützer zugewandten Enden verschoben werden müssen.

Es kann vorgesehen sein, dass die Radschutzvorrichtung zwei Streben umfasst, die derart einander gegenüberliegen, dass sie im an dem Zweirad angebauten Zustand der Radschutzvorrichtung auf unterschiedlichen Seiten des Rades angeordnet sind. Dies wird in den meisten Fällen die sinnvollste Gestaltung sein, bei der sich eine hohe Stabilität der Radschutzvorrichtung ergibt.

Es ist allerdings durchaus auch denkbar, dass sich lediglich eine einzige Strebe von der rechten Seite des Rades ausgehend zum ersten Verbindungsbereich erstreckt, zwischen dem ersten Verbindungsbereich und dem zweiten Verbindungsbereich in Längsrichtung des Radschützers verläuft und sich von dem zweiten Verbindungsbereich zur linken Seite des Rades erstreckt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht eines Rades eines Fahrrads mit einer ersten Ausführungsform einer erfindungsgemäßen Radschutzvorrichtung;
- Fig. 2: eine Ansicht gemäß dem Pfeil II in Fig. 1;
- Fig. 3: eine Rückansicht des Rades gemäß Fig. 1;
- Fig. 4: eine Untenansicht der Radschutzvorrichtung gemäß Fig. 1;
- Fig. 5: eine Ansicht gemäß den Pfeilen V - V in Fig. 4;
- Fig. 6: eine Ansicht gemäß den Pfeilen VI - VI in Fig. 5;
- Fig. 7: eine Ansicht gemäß dem Pfeil VII in Fig. 6;
- Fig. 8: eine Untenansicht einer zweiten Ausführungsform einer erfindungsgemäßen Radschutzvorrichtung;
- Fig. 9: eine Ansicht gemäß dem Pfeil IX in Fig. 8;

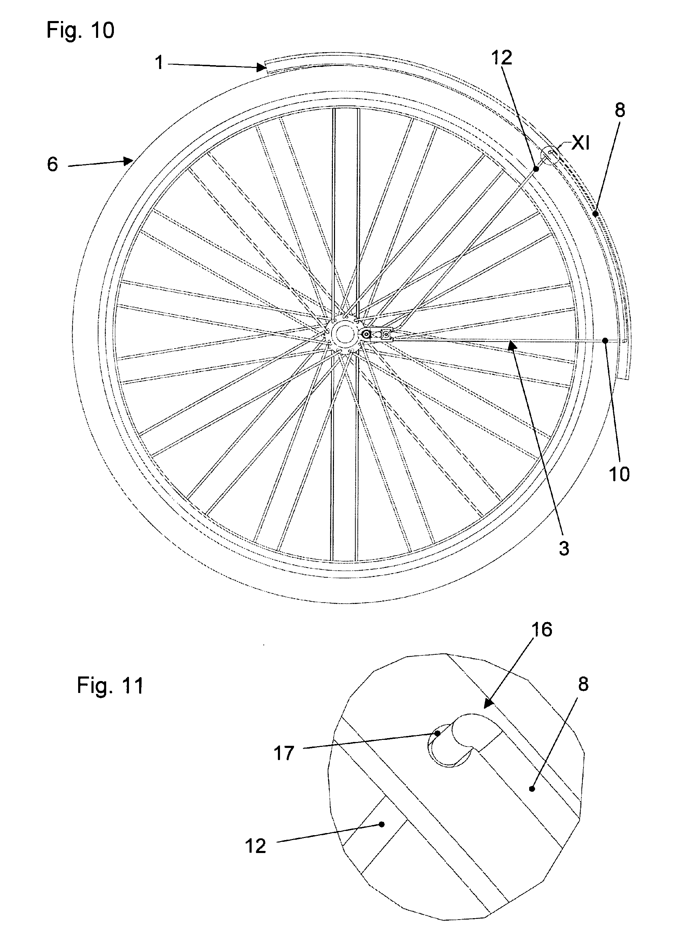

- Fig. 10: eine Seitenansicht eines Rades eines Fahrrads mit einer dritten Ausführungsform einer erfindungsgemäßen Radschutzvorrichtung;
- Fig. 11: eine Ansicht gemäß dem Pfeil XI in Fig. 10.

In den Figuren sind gleiche oder funktional gleiche Teile mit den gleichen Bezugszeichen versehen.

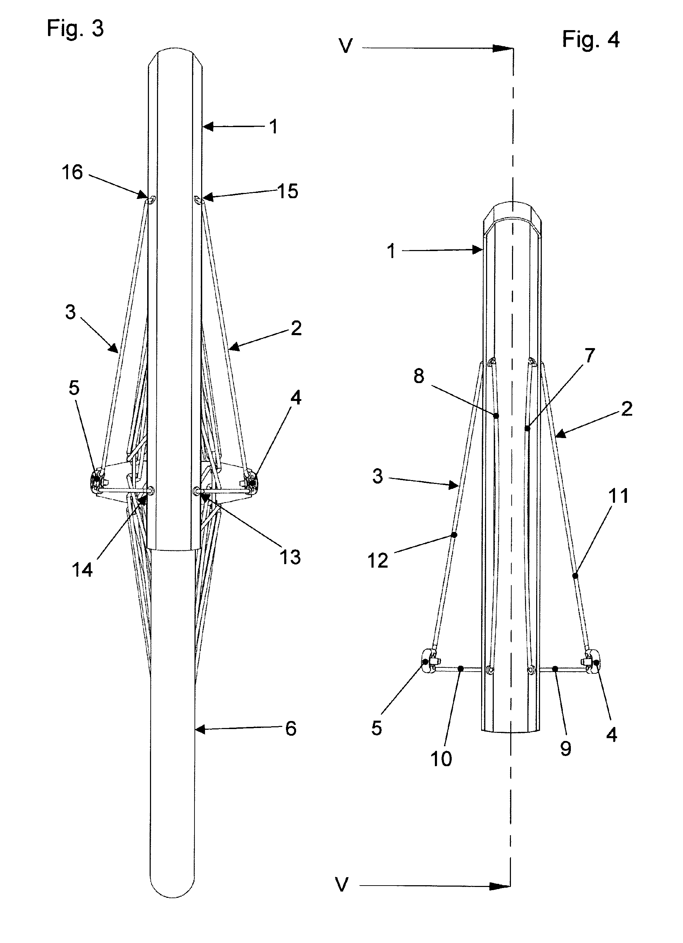

Fig. 3 und Fig. 4 zeigen, dass die erste Ausführungsform einer erfindungsgemäßen Radschutzvorrichtung einen Radschützer 1, zwei Streben 2, 3 und zwei Verbindungsmittel 4, 5 umfassen. Die Verbindungsmittel 4, 5 können geeignet mit Teilen des Zweirads, wie beispielsweise mit den entsprechenden Ausfallenden des Fahrradrahmens (nicht abgebildet) verbunden werden. Die beiden Streben 2, 3 sind auf unterschiedlichen Seiten des Rades 6 angeordnet.

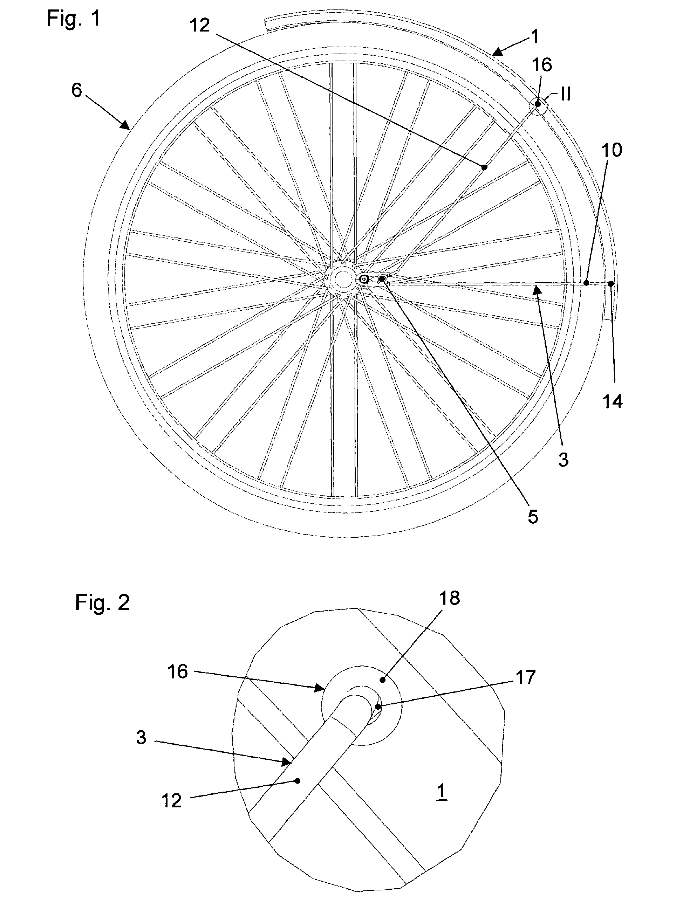

Der Radschützer 1 weist auf jeder Seite des Rades 6 einen ersten Verbindungsbereich 13, 14 und einen von diesem in Umfangsrichtung beabstandeten zweiten Verbindungsbereich 15, 16 auf. Ein jeder der Verbindungsbereich 13, 14, 15, 16 wird jeweils im Wesentlichen durch eine Öffnung 17 mit kreisförmigem Querschnitt gebildet, die im ersten Ausführungsbeispiel jeweils noch von einem ringförmigen Dichtmittel 18 umgeben ist (siehe Fig. 2).

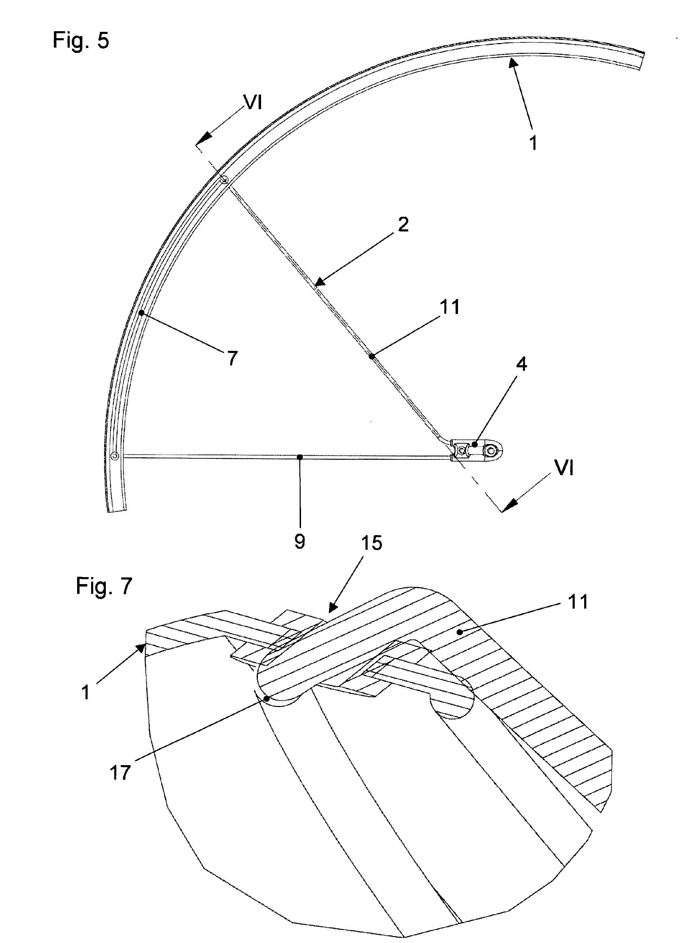

Eine jede der Streben 2, 3 weist einen ersten Abschnitt 7, 8, einen zweiten Abschnitt 9, 10 und einen dritten Abschnitt 11, 12 auf (siehe auch Fig. 5). Der zweite Abschnitt 9, 10 erstreckt sich von dem jeweiligen Verbindungsmittel 4, 5 im Wesentlichen in radialer Richtung des Rades 6 zu dem jeweiligen ersten Verbindungsbereich 13, 14. Dort erstreckt sich die Strebe 2, 3 durch die entsprechende Öffnung 17 von der Außenseite zur Innenseite des Radschützers 1 und verläuft ab dem ersten Verbindungsbereich 13, 14 als erster Abschnitt 7, 8 auf der Innenseite des Radschützers 1 in dessen Längsrichtung.

Durch die Öffnung 17 des jeweiligen zweiten Verbindungsbereichs 15, 16 erstreckt sich die Strebe dann wieder von der Innenseite zur Außenseite. Von dem jeweiligen zweiten Verbindungsbereich 15, 16 erstreckt sich dann jeweils der dritte Abschnitt 11, 12 im Wesentlichen in radialer Richtung des Rades 6 zu dem jeweiligen Verbindungsmittel 4, 5.

In das auf der rechten Seite des Rades 6 angeordnete Verbindungsmittel 4 sind die Enden der zweiten und der dritten Abschnitte 9, 11 eingesteckt. In das auf der linken Seite des Rades 6 angeordnete Verbindungsmittel 5 sind die Enden der zweiten und der dritten Abschnitte 10, 12 eingesteckt. Die Enden der zweiten Abschnitte 9, 10 einerseits sind relativ zu den Enden der dritten Abschnitte 11, 12 andererseits in dem jeweiligen Verbindungsmittel 4, 5 verschiebbar, so dass sich dadurch eine Justagemöglichkeit ergibt.

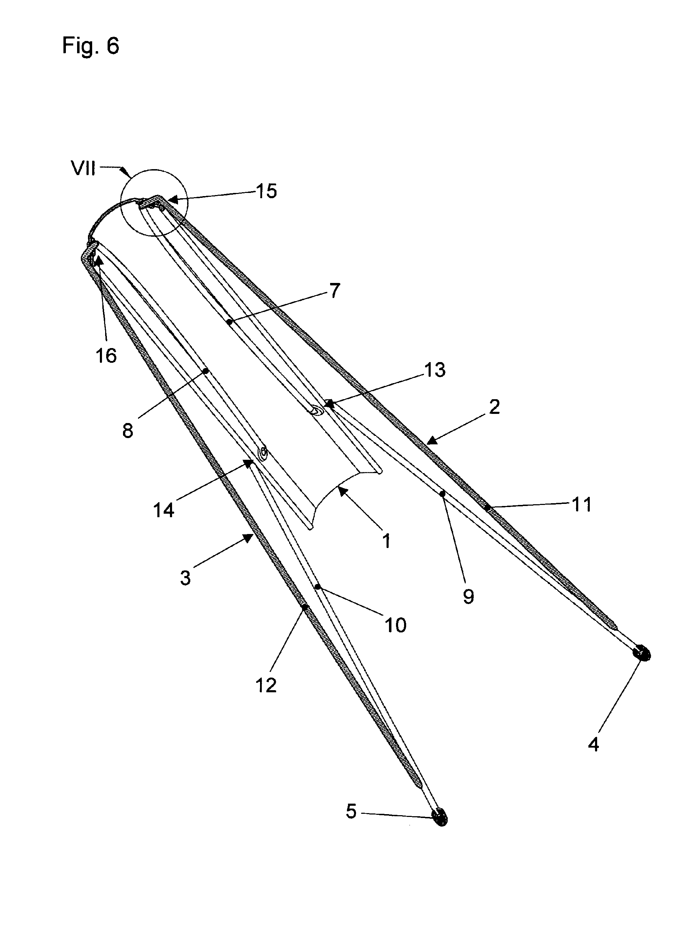

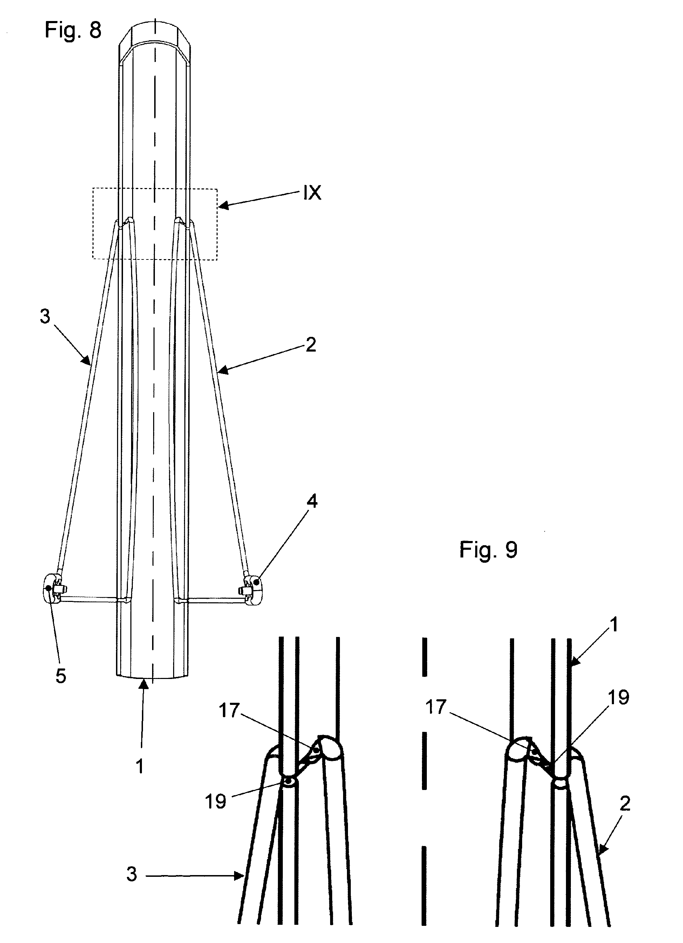

Die Ausführungsform gemäß den Fig. 8 und 9 unterscheidet sich von derjenigen gemäß den Fig. 1 bis 7 einerseits dadurch, dass die Öffnungen 17 nicht von Dichtmitteln 18 umgeben sind. Andererseits ist bei dieser Ausführungsform jeder der Öffnungen 17 ein Schlitz 19 in dem Radschützer 1 zugeordnet. Die Schlitze 19 verbinden die jeweilige Öffnung 17 in Querrichtung des Radschützers 1 mit dem nächstliegenden Rand des Radschützers 1.

Die Ausführungsform gemäß den Fig. 8 und 9 unterscheidet sich von derjenigen gemäß den Fig. 1 bis 7 einerseits dadurch, dass die Öffnungen 17 nicht von Dichtmitteln 18 umgeben sind. Andererseits verlaufen bei dieser Ausführungsform die ersten Abschnitte 7, 8 der Streben 2, 3 nicht auf der Innenseite, sondern auf der Außenseite des Radschützers 1.

In einer alternativen, nicht abgebildeten Ausführungsform besteht die Möglichkeit, dass die mindestens eine Strebe 2, 3 in zumindest einem der Verbindungsbereiche 13, 14, 15, 16 über ein zusätzliches Verbindungsteil mit dem Radschützer (1) verbunden ist. Dabei könnte dann beispielsweise auch die entsprechende Öffnung 17 wegfallen. Das Verbindungsteil kann dabei eine Nut aufweisen, in der die mindestens eine Strebe 2, 3 aufgenommen ist.

## Patentansprüche

1. Radschutzvorrichtung für ein Zweirad, insbesondere für ein Fahrrad, umfassend
- einen Radschützer (1),
- mindestens eine Strebe (2, 3), die einerseits mit dem Radschützer (1) verbunden ist und andererseits mittelbar oder unmittelbar mit einem Teil des Zweirads verbunden werden kann,
**dadurch gekennzeichnet, dass** die mindestens eine Strebe (2, 3) in einem ersten Verbindungsbereich (13, 14) und in einem zweiten Verbindungsbereich (15, 16) mit dem Radschützer (1) verbunden ist und dass sich ein erster Abschnitt (7, 8) der mindestens einen Strebe (2, 3) zwischen den beiden Verbindungsbereichen (13, 14; 15, 16) in der Längsrichtung des Radschützers (1) erstreckt.

2. Radschutzvorrichtung nach Anspruch 1, **dadurch gekennzeichnet, dass** die mindestens eine Strebe (2, 3) zwischen den beiden Verbindungsbereichen (13, 14; 15, 16) auf der Innenseite des Radschützers (1) verläuft.

3. Radschutzvorrichtung nach Anspruch 1, **dadurch gekennzeichnet, dass** die mindestens eine Strebe (2, 3) zwischen den beiden Verbindungsbereichen (13, 14; 15, 16) auf der Außenseite des Radschützers (1) verläuft.

4. Radschutzvorrichtung nach einem der Ansprüche 1 bis 3, **dadurch gekennzeichnet, dass** mindestens einer der Verbindungsbereiche (13, 14; 15, 16) eine Öffnung (17) in dem Radschützer (1) umfasst oder durch eine Öffnung (17) in dem Radschützer (1) gebildet ist, wobei sich die mindestens eine Strebe (2, 3) von der Innenseite des Radschützers (1) zur Außenseite des Radschützers (1) oder von der Außenseite des Radschützers (1) zur Innenseite des Radschützers (1) durch die Öffnung (17) hindurch erstreckt.

5. Radschutzvorrichtung nach Anspruch 4, **dadurch gekennzeichnet, dass** die Öffnung (17) von Dichtmitteln (18) umgeben ist.

6. Radschutzvorrichtung nach einem der Ansprüche 4 oder 5, **dadurch gekennzeichnet, dass** die Öffnung (17) zumindest abschnittsweise einen kreisförmigen Querschnitt aufweist.

7. Radschutzvorrichtung nach einem der Ansprüche 4 bis 6, **dadurch gekennzeichnet, dass** die Öffnung (17) über einen Schlitz (19) mit dem Rand des Radschützers (1) verbunden ist, wobei sich der Schlitz (19) insbesondere in Querrichtung des Radschützers (1) erstreckt.

8. Radschutzvorrichtung nach einem der Ansprüche 1 bis 7, **dadurch gekennzeichnet, dass** mindestens einer der Verbindungsbereiche (13, 14; 15, 16) ein Verbindungsteil umfasst, das die mindestens eine Strebe (2, 3) mit dem Radschützer (1) verbindet.

9. Radschutzvorrichtung nach einem der Ansprüche 1 bis 8, **dadurch gekennzeichnet, dass** die Radschutzvorrichtung ein Verbindungsmittel (4, 5) umfasst, durch das die mindestens eine Strebe (2, 3) mit einem Teil des Zweirads, insbesondere dem Rahmen des Zweirades, verbunden werden kann.

10. Radschutzvorrichtung nach einem der Ansprüche 1 bis 9, **dadurch gekennzeichnet, dass** die mindestens eine Strebe (2, 3) einen zweiten Abschnitt (9, 10) aufweist, der von dem ersten Verbindungsbereich (13, 14) wegragt, und dass die mindestens eine Strebe (2, 3) einen dritten Abschnitt (11, 12) aufweist, der von dem zweiten Verbindungsbereich (15, 16) wegragt, wobei der erste Abschnitt (7, 8) der mindestens einen Strebe (2, 3) zwischen dem zweiten und dem dritten Abschnitt (9, 10; 11, 12) angeordnet ist.

11. Radschutzvorrichtung nach Anspruch 10, **dadurch gekennzeichnet, dass** der zweite und der dritte Abschnitt (9, 10; 11, 12) der mindestens einen Strebe (2, 3) aufeinander zu verlaufen, insbesondere V-förmig aufeinander zu verlaufen.

12. Radschutzvorrichtung nach einem der Ansprüche 10 oder 11, **dadurch gekennzeichnet, dass** die von dem Radschützer (1) abgewandten Enden des zweiten und des dritten Abschnitts (9, 10; 11, 12) der mindestens einen Strebe (2, 3) mit dem Verbindungsmittel (4, 5) verbunden sind, insbesondere in dieses eingesteckt sind.

13. Radschutzvorrichtung nach einem der Ansprüche 10 oder 11, **dadurch gekennzeichnet, dass** die Radschutzvorrichtung Justagemittel umfasst, die eine Verschiebung der von dem Radschützer (1) abgewandten Enden des zweiten und des dritten Abschnitts (9, 10; 11, 12) der mindestens einen Strebe (2, 3) gegeneinander, insbesondere in Längsrichtung der Abschnitte (9, 10; 11, 12), ermöglichen.

14. Radschutzvorrichtung nach Anspruch 12, **dadurch gekennzeichnet, dass** die Verbindungsmittel (4, 5) als Justagemittel dienen.

15. Radschutzvorrichtung nach einem der Ansprüche 1 bis 14, **dadurch gekennzeichnet, dass** die Radschutzvorrichtung zwei Streben (2, 3) umfasst, die derart einander gegenüberliegen, dass sie im an dem Zweirad angebauten Zustand der Radschutzvorrichtung auf unterschiedlichen Seiten des Rades (6) angeordnet sind.
